Europäisches Patentamt

(19) European Patent Office

Office européen des brevets

(11) Publication number: **0 330 032**
A1

## (12) EUROPEAN PATENT APPLICATION

(21) Application number: 89102413.5

(51) Int. Cl.⁴: **B29B 7/60** , **B01F 15/04**

(22) Date of filing: 13.02.89

(30) Priority: 26.02.88 IT 1957088

(43) Date of publication of application:
30.08.89 Bulletin 89/35

(84) Designated Contracting States:
DE FR GB

(71) Applicant: IMPIANTI OMS S.p.A.
Via Sabbionetta
I-20050 Verano Brianza (Prov. of Milano)(IT)

(72) Inventor: **Riva, Paolo**
Via Pastore 79
. I-20034 Giussano Milano(IT)

(74) Representative: **Modiano, Guido et al**
MODIANO, JOSIF, PISANTY & STAUB
Modiano & Associati Via Meravigli, 16
I-20123 Milan(IT)

(54) **Dosage unit for components of an injectable resin.**

㊗ The invention relates to a dosage unit for inject-
ing components of an injectable resin comprising a
dosage cylinder (4) having a feed duct (5) and a
discharge duct (6) for the component to be injected
and a piston (7) sealingly and slidably accommo-
dated in the cylinder on which actuation means
adapted to move the piston act to fill and empty the
dosage cylinder. The actuation means comprise an
actuator element (10) which acts on the piston (7) to
impart thereto the useful power for injecting the
component and a control element (14) acting on the
piston to impart a controlled speed thereto. The
actuator element (10) and the control element (14)
are separate and operatively independent from one
another.

# DOSAGE UNIT FOR COMPONENTS OF AN INJECTABLE RESIN

The present invention relates to a dosage unit for components of an injectable resin particularly but not exclusively of the polyurethane type.

As is known, in the industrial field of the manufacture of the mono- or multi-component resin products some mechanical and physical characteristics of the finished products can be obtained by using special low-viscosity materials or by loading some components of the mixture with more or less abrasive products.

An essential requirement in order to obtain these characteristics resides in the fact that the ratios among the different components of the mixture must be observed with very narrow tolerances.

In order to solve this problem, some dosage-machine manufacturers have provided rotary-pump mixing systems, others have used dosage systems for two or more components using positive-displacement pumps with piston-equipped dosage cylinders, which have the advantage of being able to process low-viscosity and highly abrasive materials without the disadvantages peculiar to rotary pumps.

Dosage units are known which have dosage cylinders operated by actuator systems with oleodynamic cylinders; their operation is controlled by means of position transducers and servo-valve units associated with a computerized control unit. These systems satisfactorily perform the tasks for which they are intended, but they have the disadvantage of being considerably complicated, expensive and difficult as regards maintenance.

Polymer technology has recently provided manufacturers with resins having high-reactivity components, for which extremely short mixing times, on the order of 0.5 to 2 sec, are required; such resins allow to manufacture finished products with cycles lasting 1 to 1.5 minutes. Said components react and polymerize virtually instantly, by virtue of their nebulization and static mixing in countercurrent at high pressure (approximately 150-200 bar) in extremely small mixing chambers. In order to cover the entire range of producible articles it has been necessary to design and build machines with high flow-rates requiring considerable installed power. For example, an overall power of approximately 180-900 kW is required for the normal operation of a dosage machine having a maximum flow-rate of 5 kg/s.

In order to obtain this, oleodynamic control units of considerable size have been provided; since these units operate at high pressure (200 bar, as mentioned) and have a rather limited efficiency, they develop large amounts of heat to be disposed of, so that these oleodynamic systems must be fitted with very complicated cooling and oil temperature control systems in order to ensure the correct operation of the adjustment servo-valves of said oleodynamic system.

Other systems are known for actuating the pistons of the dosage cylinders; such systems use actuation ball-screws operated by direct-current motors. These systems, though they have some advantages with respect to oleodynamic ones, have the disadvantage that screws for transmitting high power for high flow-rate machines have exorbitant costs and thus make the dosage unit uneconomical.

The aim of the present invention is to obviate the above described disadvantages by providing a dosage unit having combined control systems with high operating precision and reliability.

Within the scope of this aim, an object of the invention is to provide a dosage unit using a simple and high-efficiency actuation and control system.

A further object of the invention is to provide a dosage unit requiring reduced installed power.

A further object of the present invention is to obtain a dosage unit having a limited use of maximum power and with very low energy dispersion, with consequent characteristics of economy and environment protection.

Not least object of the invention is to provide a dosage unit having a low maintenance cost.

This aim, as well as these and other objects which will become apparent hereinafter, are achieved by a dosage unit for components of an injectable resin, as defined in the appended claims.

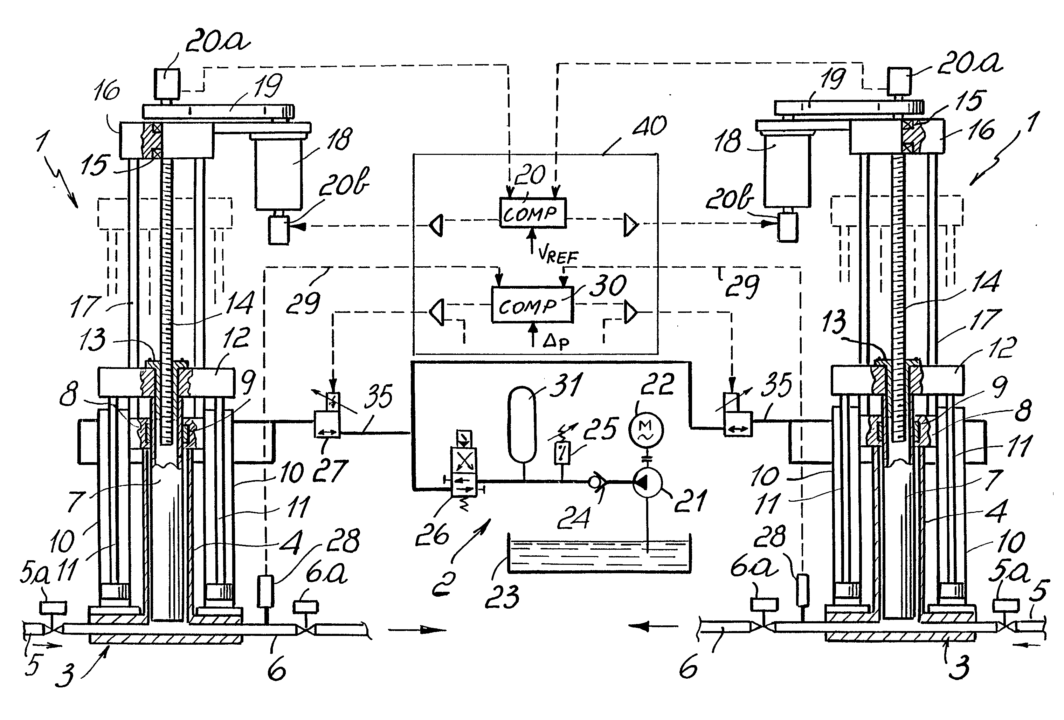

The characteristics and advantages of the invention will become apparent from the description of a preferred but not exclusive embodiment of the dosage unit according to the invention, illustrated only by way of non-limitative example in the accompanying drawing, wherein the only figure is a general diagram of a dosage machine comprising two dosage units according to the invention.

With reference to said figure, a dosage machine is shown comprising two dosage units, each indicated as a whole by the reference numeral 1, associated with an oleodynamic control unit indicated at 2.

According to the invention, each dosage unit 1 comprises a supporting frame 3 for at least one dosage cylinder 4 having a feed duct 5 fitted with a choke valve 5a and a discharge duct 6 fitted with a choke valve 6a. The piston 7 upwardly supported by the crosspiece 8 fitted with sealing rings 9 is sealingly slidable inside the dosage cylinder 4.

According to the invention, actuation means act on the piston 7 for moving it as required to fill and empty the dosage cylinder 4.

More particularly, an actuator element acts on the piston 7 to impart thereto the power required to empty the dosage cylinder 4. In detail, the piston 7 is upwardly rigidly associated with the connecting plate 12 which is rigidly coupled at its two ends with one or two plungers 11 sliding in respective oleodynamic cylinders 10 mounted with their longitudinal axes parallel to the dosage cylinder 4 and to the piston 7. The oleodynamic cylinders 10 are connected to the oleodynamic control unit 2 by means of the ducts 35.

According to the invention, the actuation means of the piston 7 advantageously comprise a control element acting on the piston 7 to impart thereto a controlled speed in the dosage cylinder 4.

More particularly, a threaded bush 13 is inserted at the center of the connecting plate 12 coaxially to the piston 7, and an actuation screw 14 engages in said bush. Said actuation screw is upwardly supported by a bearing 15 inserted in an upper connecting plate 16 rigidly associated with the crosspiece 8 by two sliding columns 17 which also act as guiding elements for the connecting plate 12. The actuation screw 14 is rotated by the direct-current motor 18 by means of a pulley 19. An angular speed transducer or encoder 20a is mounted on the actuation screw 14 and a device 20b for adjusting the rotation rate, such as a speedometer dynamo, is keyed on the axis of the motor 18. The output signal of the encoder 20a is sent to a first control unit 20 which compares it with a reference signal $V_{REF}$ which corresponds to a preset rotation rate of the screw 14 and thus to a preset advancement of the piston 7. The resulting error signal is pre-amplified and used to drive the adjustment device 20b so as to obtain a controlled advancement speed for the piston 7.

The actuation screw 14 is of the non-reversible type, i.e. it is adapted to impart an advancing motion to the threaded bush with which it engages but not to rotate as an effect of the movement of the bush 13. It may furthermore possibly be a ball-screw or have another lubricating means.

From what has been described above it is evident that the actuator element acting on the piston is separate and operatively independent from the element controlling its speed of advancement relatively to the dosage cylinder 4. The power of the actuation motor of the actuation screw 14 is conveniently at least sufficient to overcome the frictions between said actuation screw and the threaded bush 13, but does not contribute substantially to provide the power required to actuate the piston 7 to empty the dosage cylinder 4.

With reference now to the oleodynamic control unit 2, said unit is composed of a pump 21 actuated by an AC motor 22 which draws oil from a collection tank 23. A non-return valve 24, a safety valve 25 and a driven reflow valve 26 are arranged on the delivery circuit.

A servo-controlled electric valve 27 is interposed between said driven valve 26 and the feed duct 35 of the oleodynamic cylinders 10 to adjust the delivery pressure for said oleodynamic cylinders 10.

An element for controlling the pressure acting on the adjustment valve 27 is advantageously provided to keep constant the difference between the pressure of the component leaving said dosage cylinder and the delivery pressure of the oil at the input of the actuator cylinders 10.

In particular, a pressure transducer 28 is arranged on the discharge duct 6 of the dosage cylinder 4 and is connected to a second electronic comparator unit 30 by means of the electric line 29. In order to minimize the difference between the pressure of the delivery circuit of the oleodynamic cylinders 10 and the mixing pressure of the component it is sufficient to set a preset differential value $\Delta_\eta$, determined by experimental tests, on the electronic comparator unit 30. The sum signal of said partial signals, processed by the electronic unit 30 and conveniently amplified, is used to drive the servo-control of the adjustment valve 27, which determines the pressure required to move the piston 7 in the feed duct of the oleodynamic cylinders 10, said pressure being variable in each instance according to the conditions required inside the mixing chamber.

According to the invention, at least one energy storing unit is conveniently arranged after the pump of the oleodynamic control unit, said unit having the task of storing the oleodynamic energy transmitted to the oleodynamic control unit in the reflow of the oil from said actuator during the filling of the dosage cylinder, which is performed by external component-filling means.

In particular, one or more hydropneumatic accumulators 31 with oil-gas separation membrane are inserted between the non-return valve 24 and the safety valve 26. Inside each accumulator 31 the gas confined above the oil-gas separation membrane, normally nitrogen, is compressed by the pump 21 during the refilling of the dosage cylinders 7 and during the pause between one flow casting and the next and can return its potential energy during the successive actuation of the oleodynamic cylinders 10, which work is predominantly performed by the motor 22 of the oleodynamic control unit. The reflow of the oil towards the oleodynamic control unit is partially performed by virtue of the pressure exerted on the piston 7 by the component introduced in the dosage cylinder through the feed duct 5 from an external pressurized tank, not illustrated, and partially by virtue of the energy supplied by the actuation screw 14 actuated by the motor 20. The flow-rate of the oil during refilling can remain within rather limited values, but acts over a period, on the order of 15-20 sec, which is rather long if compared with the approximately 5-sec duration of the discharge of the dosage cylinder. Incidentally, the comparator units 20 and 30, though acting on independent parameters, are combined in a single central control unit (schematically indicated at 40) together with other system control devices to which the present invention does not relate.

From the above it can be seen that the oleodynamic control unit can have a very limited power in kW, since power is accumulated during idle phases of the dosage machine, which are always longer than the working ones.

From what has been described above the operation of the dosage unit is rather evident.

The component mixing time and consequently the speed of advancement of the piston 7 in the dosage cylinder 4 are initially preset through the central control unit which correspondingly generates a voltage $V_{REF}$ supplied to the device 20 for controlling the rotation rate of the motor 18 or of the actuation screw 14. The pressure differential $\Delta\eta$ which is desired between the delivery of the oil in the oleodynamic cylinders 10 and the output pressure of the dosage cylinder is furthermore preset through the central unit. These two values are determined according to the chemical-physical properties of the components to be mixed and to the mechanical and physical characteristics of the product to be manufactured.

The dosage cylinder is then filled by opening the choke valve 5a on the duct 5 for feeding the component to the dosage cylinder 4 and by turning the actuation screw 14 in the opposed direction with respect to the discharge phase. During this phase the oil contained in the oleodynamic cylinders 10 flows back towards the oleodynamic control unit 2 and the pump 21 charges the accumulators 31. Once the filling phase has been performed, the mixing phase begins by actuating both the pump of the oleodynamic control unit and the motor 18 of the actuation screw 14, which operate independently and are correlated by the above mentioned operating parameters. In practice it has been observed that the dosage unit according to the invention fully achieves the intended aim since, by virtue of the precision and simplicity of the screw adjustment system together with the power provided by the oleodynamic actuation system, the dosage of components to be mixed can be obtained accurately and reliably.

The systems for balancing the delivery pressure in the feed circuit of the oleodynamic cylinders 10 and the system for storing energy in the hydropneumatic accumulators furthermore save a considerable amount of energy, reduce dissipations in the form of heat, and reduce the management and maintenance costs of the machine.

The dosage unit thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A dosage unit for components of an injectable resin, comprising a frame (3) supporting at least one dosage cylinder (4) having a feed duct (5) and a discharge duct (6) for the component to be dosed, a piston (7) slidably and sealingly accommodated in said cylinder, actuation means (10,14) acting on said piston and being adapted to move it to fill and empty said dosage cylinder, characterized in that said actuation means comprise an actuator element (10) acting on said piston (7) to impart thereto the power for injecting said component and a control element (14) acting on said piston to impart thereto a controlled speed in said cylinder, said actuator element and said control element being separate and operatively independent from one another.

2. A dosage unit according to claim 1, characterized in that said actuator element comprises at least one oleodynamic actuator cylinder (10) mounted on said frame (3) and connected to an end of said piston (7).

3. A dosage unit according to claim 1, characterized in that said speed control element comprises a screw (14) rotatably mounted on said frame (3) and interacting with a female thread (13) fixed on said piston (7), said screw being rotated by an electric motor (18) provided with a device (20,20a,20b) for adjusting its rotation rate.

4. A dosage unit, according to any of the preceding claims, characterized in that said screw (14) is non-reversible and the power of said electric motor (18) is at least sufficient to overcome the frictions acting on said screw in the motion of said piston (7).

5. A dosage unit, according to any of the preceding claims, characterized in that said adjustment device of said electric motor (18) comprises a speedometer dynamo (20b) and an encoder (20a) associated with a programmable control unit (40,20).

6. A dosage unit, according to any of the preceding claims, characterized in that said actuator cylinder (10) is actuated by an oleodynamic control unit (2) generating high-pressure oil and comprising at least one pressure adjustment valve (27) having a servo-control device.

7. A dosage unit, according to any of the preceding claims, characterized in that it has a pressure control element (28,30) acting on said adjustment valve (27) to keep constant the difference between the delivery pressure of the oil at the input of said actuator cylinder (10) and the pressure of the component at the output of said dosage cylinder (4) during the injection of said component, said pressure difference being selectively preset $\Delta\eta$.

8. A dosage unit, according to any of the preceding claims, characterized in that said pressure control element comprises at least one electronic unit (30) receiving a first signal, arriving from a pressure transducer (28) mounted on the discharge duct (6) of said dosage cylinder (4), and a second reference signal ($\Delta\eta$), equal to the preset pressure difference, the signal resulting from the sum of said first and second signals being sent to said servo-control device of said pressure adjustment valve (27) to adjust the delivery pressure of the oil to the oleodynamic cylinders (10).

9. A dosage unit, according to any of the preceding claims, characterized in that at least one unit (31) for storing the oleodynamic energy transmitted to said oleodynamic control unit (2) in the pause phases and in the filling phase of said dosage cylinder (4), performed by external means for filling with said component, is arranged after the pump (21) of said oleodynamic control unit.

10. A dosage unit, according to any of the preceding claims, characterized in that said storage unit comprises at least one hydropneumatic accumulator (31) with oil-gas separation membrane.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 120 419 (KRAUSS-MAFFEI AG) * Page 5, lines 9-27; figure * --- | 1-10 | B 29 B 7/60 B 01 F 15/04 |
| A | US-A-4 286 732 (J.R. JAMES) --- | | |
| A | US-A-2 960 925 (R.O. BRADLEY) --- | | |
| A | DE-A-2 016 999 (P. LIPPKE) --- | | |
| A | GB-A-1 360 225 (DISTILLERS CO. (CARBON DIOXIDE) LTD) ----- | | |

TECHNICAL FIELDS SEARCHED (Int. Cl.4)

B 29 B
B 01 F
G 05 D
G 01 F

The present search report has been drawn up for all claims

| Place of search | Date of completion of the search | Examiner |
|---|---|---|
| THE HAGUE | 05-06-1989 | PEETERS S. |

EPO FORM 1503 03.82 (P0401)